# EUROPEAN PATENT SPECIFICATION

(11) **EP 2 275 310 B1**
(45) Date of publication and mention of the grant of the patent: **11.09.2013**
(21) Application number: 10168785.3
(22) Date of filing: 07.07.2010
(51) Int. Cl.: B60R 21/06, B60R 21/02

(54) **Vehicle partition wall**
Fahrzeugtrennwand
Cloisonnement de véhicule

(30) Priority: 14.07.2009 GB 0912157
(43) Date of publication of application: 19.01.2011
(73) Proprietor: Nissan Motor Manufacturing (UK) Ltd., Bedford Bedfordshire MK43 0DB (GB)
(72) Inventor: Brennan, Vince, Bedford, Bedfordshire MK43 0DB (GB)

(56) References cited:
- WO-A1-96/06756
- US-A1- 2003 122 401
- US-B1- 6 357 979
- US-B1- 6 474 713

## Description

The present invention relates to a partition wall for a light commercial vehicle. Aspects of the invention relate to a partition wall for a vehicle and to a vehicle.

It is common in light commercial vehicles such as B-segment vans to provide a partition wall which separates a cargo area at the rear of the vehicle from a cabin or occupant compartment at the front of the vehicle. Such partitions are provided to isolate the driver and any passenger from the cargo. This is particularly important in the event of severe braking or a collision, when the cargo can shift forwards within the vehicle. The partition wall dissipates the energy of the moving cargo, so as to prevent cargo intrusion into the cabin. It follows therefore that the partition wall must be strong enough to restrain the cargo in the cargo area, and to limit the extent to which it may shift towards the cabin.

Typically the partitions are formed either from a stiff wire mesh, or from a sheet metal pressing. However, the wire mesh design tends to be more costly to produce; it is therefore more common to find partitions formed by pressing the partition from sheet metal.

However, pressed sheet metal is not intrinsically particularly strong. As a result, known pressings are often not sufficiently strong to withstand the force of impact from heavier cargo without additional strengthening to reinforce the pressing.

This reinforcement typically takes the form of strengthening brackets which are spot-welded or otherwise secured to the pressing. The strengthening brackets are provided in areas of weakness to prevent the pressed sheet material from deforming under the load sustained during restraint of the shifting cargo.

Partition walls also frequently have a window to allow the occupants of the cabin to see into the cargo area. This often leads to additional reinforcement being required to protect the window glass in order to prevent fracture of the glass.

These additional reinforcements add weight and costs to the partition, and in certain circumstances can also reduce the volume of the cargo area.

A partition wall for a vehicle according to the preamble of claim 1 is known from WO 96/06756. This wall comprises a unitary panel of polycarbonate material, which by virtue of its transparency, has no need for a discrete glass window to be mounted within it. However, a panel made of polycarbonate would typically be less strong than a steel panel of equivalent dimensions.

It is an object of the present invention to at least mitigate some of the above problems.

According to an aspect of the present invention, there is provided a partition wall for a vehicle, the partition wall comprising a sheet metal pressing further comprising an integrally formed rigid window frame adapted to support a discrete window; wherein said sheet metal pressing comprises a first set of substantially vertical swages, running from an upper portion to a lower portion of said pressing in use; and said sheet metal pressing further comprises a second set of substantially horizontal swages, running from an left side to a right side of said pressing in use; characterized in that: said first set of swages and said second set of swages intersect with each other.

Advantageously, this arrangement delivers the ease of manufacture afforded by a unitary pressed part, that is to say that the partition wall requires no secondary reinforcements to be added after the pressing operation, whilst providing the strength required to manage the load experienced when cargo is restrained by the wall.

Advantageously, the swages provide not only increased stiffness to the wall, but also provide the strength required to transfer a restraint load to the vehicle body without the wall collapsing.

In an example, the swages surround at least three edges of the window frame.

In an example, at least two of the first set of swages are arranged to the left of the window frame in use, and at least two of the first set of swages are arranged to the right of the window frame in use.

In an example, two or more swage squares are provided, said squares being positioned adjacent to, and substantially level with, the window frame.

In an example, areas of locally reduced stiffness are located above, below, and to either side of the window frame.

In an example, a second area of locally reduced stiffness is located on each of the four sides of the window frame.

In an example, said wall further comprises a base portion comprising a recess.

In an example, a further arrangement of swages is provided in the lower portion of said wall, said swages being substantially parallel to the first set of swages; characterized in that: the further arrangement of swages forms a pattern such that swages of a greater length are located towards the centre line of the partition wall with the swages being of decreasing length towards the sides of the partition wall.

In an example, the partition wall has a load-bearing structure formed entirely from a single sheet of material.

According to a further aspect of the present invention, a vehicle comprises a partition wall according to any of the preceding paragraphs, where said wall is arranged to separate a cargo area at the rear of the vehicle from a cabin area of said vehicle.

In an example, said partition wall is convex towards the cargo area.

In an example, said wall is affixed to a vehicle roof at its upper portion, to the vehicle sides at its sides, and to the vehicle floor panel.

In an example, in the event of an object applying a load to the partition wall, the wall is arranged to deform so that the window frame may be displaced, whilst remaining substantially undeformed.

In an example, in the event of an object applying a load to the partition wall, the wall is arranged to deform so that deflection of the window frame is limited to rotation and/or translation without bending.

It will also be appreciated by one skilled in the art that the preferred and/or optional features relating to the present invention may be used either alone or in appropriate combination.

The invention will now be described, by way of example only, and with reference to the following drawings, in which:
Figure 1 is a schematic side view of a light commercial vehicle showing the partition wall of the present invention in hidden detail;
Figure 2 is a schematic plan view of the light commercial vehicle of Figure 1 showing the partition wall of the present invention in hidden detail;
Figure 3 is a perspective rear view of the partition wall of the present invention as viewed from the rear right hand side of the vehicle;
Figure 4 is an alternative perspective rear view of the partition wall of the present invention as viewed from the rear left hand side of the vehicle, showing the wall in greater perspective depth;
Figure 5 is a rear view of the partition wall of the present invention; and
Figures 6a and 6b show sections through the partition wall of the present invention before and after a load has been applied, to demonstrate how the deflection mechanism allows controlled deflection of the partition wall without placing undesirable loads on the window area. Figure 6a shows a vertical section taken at Z-Z from Figure 5 and Figure 6b shows a horizontal section taken at Y-Y from Figure 5.

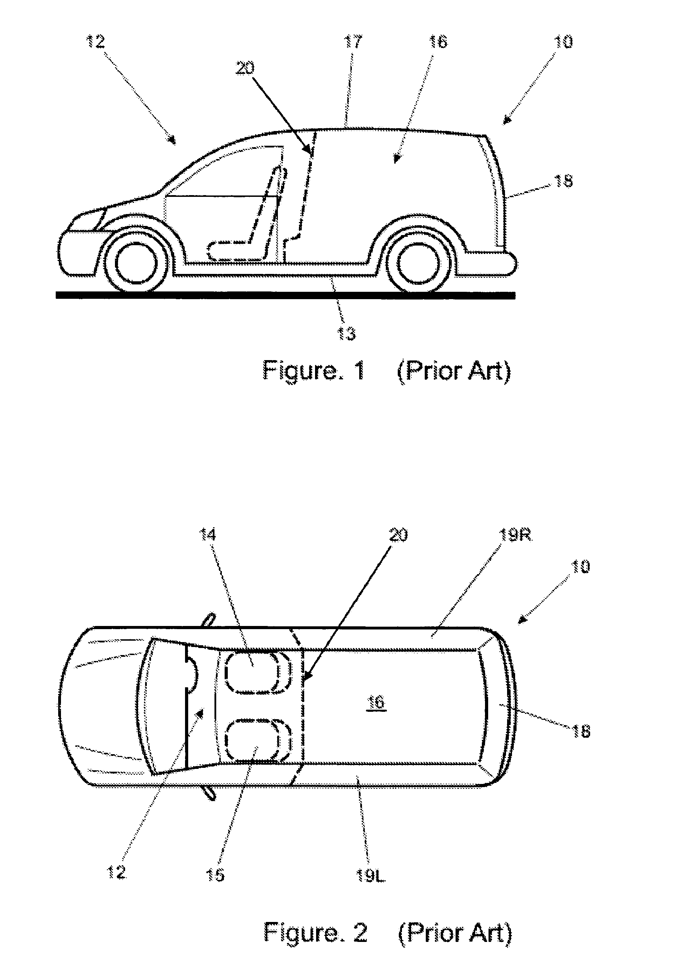

In Figures 1 and 2, a light commercial vehicle 10 is shown having a cabin area indicated generally at 12. The cabin area includes a seat 14 for a driver and a passenger seat 15. Situated behind the cabin area 12 is a cargo area indicated generally at 16. The cargo area 16 is accessed by at least one rear door 18. Both the cabin area 12 and the cargo area 16 are bounded by a roof 17 above, and a floor panel 13 below. The sides of both the cabin area 12 and the cargo area 16 are enclosed by substantially vertical left and right body sides 19L and 19R. The location of a partition wall, such as the wall of the present invention, is shown in phantom and indicated generally at 20.

The partition wall 20 is fixed to the vehicle body so that it offers a fixed barrier between the cabin area 12 and the cargo area 16.

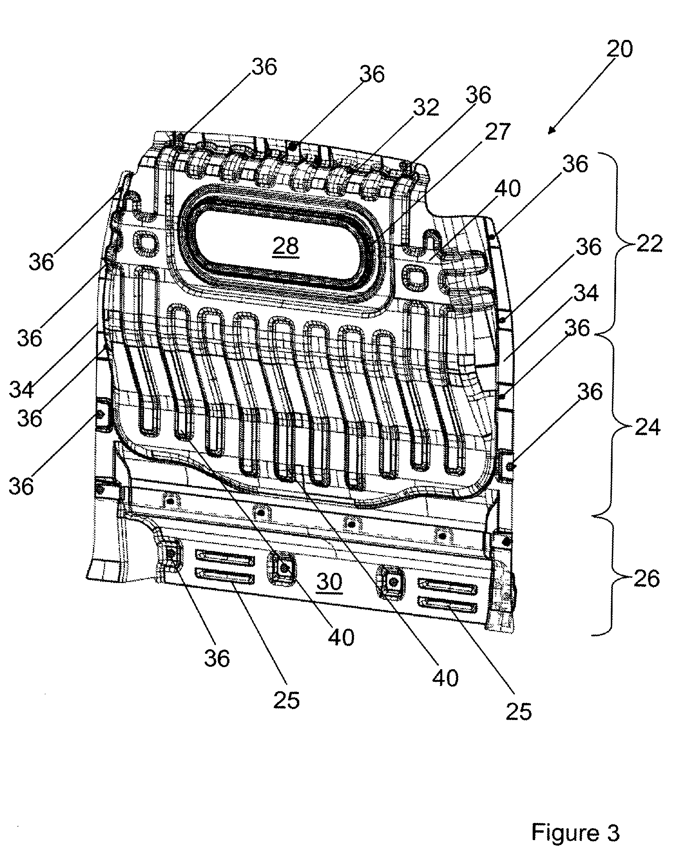

Referring now to Figure 3 which shows the partition wall 20 of the present invention in greater detail, the wall 20 has an upper portion indicated generally at 22, a lower portion indicated generally at 24, and a base portion indicated generally at 26. The upper portion 22 has a window 28 in an aperture (not numbered) to allow the occupants of the cabin 12 to look into the cargo area 16. The window 28 comprises a transparent element formed from a suitable material such as glass or transparent polycarbonate, situated in a rigid window frame 27 formed integrally with the upper portion 22 of the wall 20. In the example shown, the window is substantially rectangular with rounded or radiused corners. It will be appreciated that the size, shape and number of windows may be adjusted to suit the vehicle to which the partition wall is to be applied. The lower portion of the wall includes a longitudinal change in contour, and the base portion 26 includes a recess 30 which is positioned on the floor 13 of the cargo area 16. Lower portion 24 and base portion 26 may be joined by bolts (not shown). The wall 20 has a top 32 and sides 34. The top 32 and sides 34 define a flange having a series of wall securing- or mounting- points 36. The mounting points 36 fix to the vehicle body (not shown for clarity) to rigidly secure the wall 20 in the vehicle 10. Recess 30 includes mounting points 36 and ventilation apertures 25.

The wall 20 is formed from a single sheet of material such as a sheet of pressed steel or other suitable metal, and does not have any secondary reinforcements attached to the unitary pressing. In distinction from prior art partition walls, this is achievable by virtue of the inventive shape and positioning of the swages. The upper portion 22 and lower portion 24 define a series of swages labeled by example but not exhaustively in Figure 3 at 40. The swages 40 define a load-bearing structure which provides the wall with both stiffness and strength as will be described in further detail shortly.

While the term "increased stiffness" will always refer to a part of the wall which is stiffer than the base sheet material from which the wall is formed, the term "reduced stiffness" (or "locally reduced stiffness") is a term which is relative to the increased stiffness. Hence the reduced stiffness may be greater than, equal to, or less than, the stiffness of the basic sheet material from which the wall is formed. The same caveats also apply to the terms "relatively greater stiffness" and "relatively reduced stiffness". Furthermore, it should be noted that where swages cross or overlap, there may be more than one level or value of increased or relatively greater stiffness, as the swages interact.

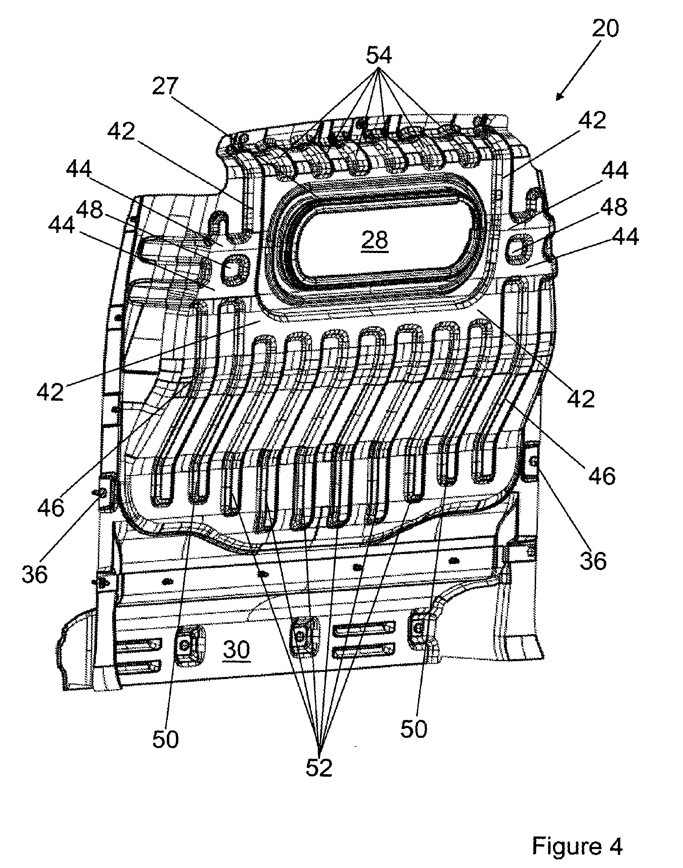

Turning now to Figure 4, the window 28 is surrounded on its lower edge and sides by a window swage 42. This window swage 42 provides the partition wall 20 with localized regions or areas of increased stiffness and therefore acts to isolate the window pane from the load associated with cargo contacting the wall 20, so as to prevent fracturing of the glass. The window swage 42 is joined at the sides of the window 28 by two horizontal swages 44 which extend outwardly from the window 28 towards the sides 34 of the wall 20. The horizontal swages 44 are bisected by side swages 46 to form a swage square 48 on either side of the window 28. Extending downwardly from the sides of the window swage 42 are intermediate swages 50 which flank a series of inner swages 52. The inner swages 52 decrease in length from the mid-line of the wall 20 towards the sides 34 of the wall 20.

In use, in the event that a cargo shifts during transport and contacts the wall 20, a significant load may be applied by the shifting cargo to the wall 20. The worst case loading of the wall results from a large point-load applied to the middle of the wall 20. In such cases, the swages 40 are arranged to manage the loading, dissipating the load away from the window 28 and towards the top 32 and sides 34 of the wall 20. In this way, the arrangement of the swages 40 is configured to minimize the deflection of the wall 20, and to minimize the risk of applying undesirable bending loads to the window 28 which could otherwise result in fracture of the window glass.

This management of forces applied to the partition wall by the shifting cargo is achieved initially by reducing the lengths of the inner swages 52 from the midline to the sides 34 of the wall. This swage pattern carries the load upwards and outwards towards the swage squares 48 which act as a focus for the load due to their increased stiffness with respect to the surrounding areas. The proximity of the squares 48 to the sides of the wall allows the load to be effectively transferred to the vehicle body. The transfer of load from the midline of the wall 20 upwards and outwards towards the swage squares 48 also serves to further isolate the window from the load, thereby assisting the window swage 42 in protecting the window glass. The swage squares 48 work in co-operation with the window swage 42 to resist bending of the window frame 27, and thus the window 28. In an alternative arrangement (not shown), the window swage 42 could be functionally combined with window frame 27.

By providing inner swages 52 of varying length to direct the load towards rigid swage squares 48 and by providing a window swage 42 surrounding the window 28, the partition wall 20 is able to provide sufficient stiffness and strength to not require any additional strengthening beyond that provided by the features integral to the unitary pressing described above.

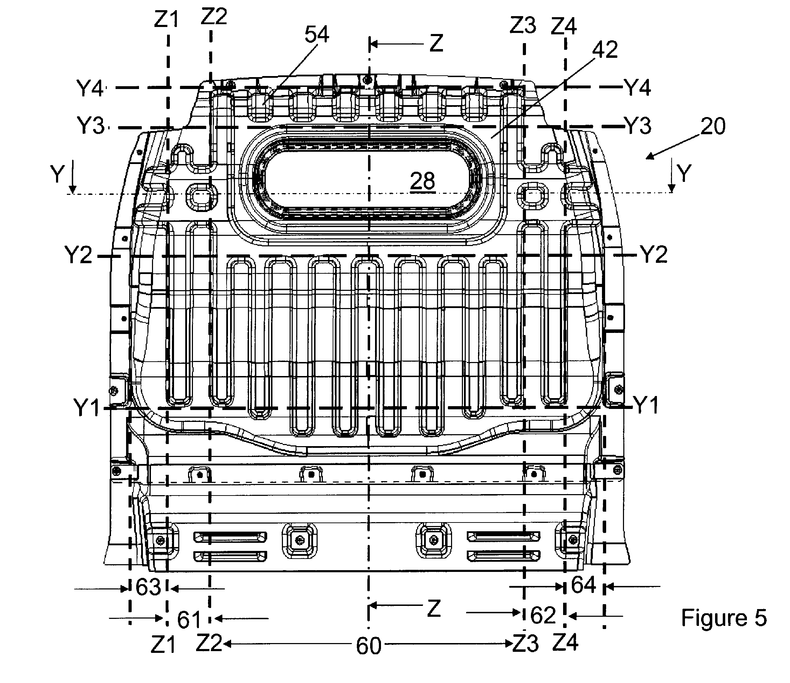

Figure 5 shows a rear view of the wall 20 of the present invention, as viewed from the cargo area 16. As described previously, the size and positioning of the swages 40 with respect to the wall 20 and the window 28 provide the key to the ability of the wall 20 to restrain relatively large longitudinal loads caused by cargo shifting forwards during transit. Moreover, the wall 20 of the present invention offers further advantages, due to the arrangement of the swages 40. The wall 20 has the capacity to restrain a cargo with a greatly reduced likelihood of damaging the window 28. The positioning of the swages 40 in the wall 20 of the present invention achieves these highly desirable properties without the need for additional reinforcement panels attached to the wall 20 or positioned around the window 28. Negating the need for reinforcement panels results in a reduction in assembly time and cost for the wall; and keeps overall weight to a minimum, optimizing vehicle payload capacity.

Figure 5 shows in detail the key features in the arrangement of the swages 40 relative to the wall 20 and glass 28. The window 28 and window swage 42 are surrounded by a series of substantially horizontal (Y1, Y2, Y3, Y4) and vertical (Z1, Z2, Z3, Z4) lines of locally reduced wall stiffness.

The lowest horizontal line Y1 is defined by the lower ends of the side swages 46 which are coterminous along a substantially horizontal line positioned above the recess 30. Y1 defines a lower boundary of the lower portion 24 which is stiffened by the presence of the inner swages 52.

The upper boundary of the lower portion 24 is defined by another substantially horizontal line Y2 of locally reduced stiffness. Y2 is formed by the upper ends of the intermediate swages 50 and inner swages 52 which are coterminous. Y2 is arranged to provide an effective axis of locally reduced stiffness, about which the window swage 42 above Y2 and the lower portion 24 below Y2 may rotate relative to each other during deformation of the wall 20; as will be described in further detail shortly.

In order to ensure that the window 28 is not put into bending if the wall deforms during the restraint of a shifting cargo, another substantially horizontal line Y3 of locally reduced wall stiffness is located between the top of the window 28 and a series of vertically orientated upper swages 54, whose lower ends are coterminous. The lines of locally reduced stiffness Y2 and Y3, arranged below and above the relatively stiff window swage 42, allow the window 28 to stay in plane; and to rotate and/or translate relative to the swages 40 and upper swages 54 in the event that the wall is deformed by a shifting cargo.

Finally, the upper ends of the upper swages 54 are coterminous along a substantially horizontal line located just below the vehicle roof. The region between the upper ends of the upper swages 54 and the roof forms another substantially horizontal line of reduced stiffness Y4.

The provision of the two lines of locally reduced stiffness, Y3 and Y4 below and above the upper swages 54, allows the relatively short upper swages 54 to rotate forwards when the centre of the wall 20 is deflected forwards. This simultaneous rotation of the upper swages 54 serves to support the window 28, whilst keeping any bending forces in the area of window 28 to a minimum. The deformation mechanism of the wall 20 about lines Y1, Y2, Y3 and Y4 ensures that deflection and deformation is managed, and therefore that the integrity of the window 28 is maintained.

It will be appreciated that tuning of the natural frequency of the wall, and of the threshold load at which the wall 20 will start to deform in the event it is loaded by a shifting cargo, may be adjusted to suit a given vehicle application by adjusting the width and depth of the swages 40 and 54.

In addition to the substantially horizontal lines Y1, Y2, Y3 and Y4 of locally reduced wall stiffness, the deformation mechanism of the wall 20 is augmented by four substantially vertical lines Z1, Z2, Z3 and Z4 of locally reduced wall stiffness.

A first pair of substantially vertical lines Z1 and Z4 are arranged on the left and right side respectively (as shown in the Figure) of the window 28, and define lines of locally reduced wall stiffness. Z1 and Z4 are located between the side swages 46 and the sides 34 of the wall 20. The wall 20 is thus permitted to deflect about a pair of substantially vertical axes defined by Z1 and Z4 in the event that the load applied to the wall 20 by a shifting cargo exceeds a pre-determined limit.

Increasing the ultimate limit for forward excursion of the wall 20 reduces the forces transmitted into the window 28, and the loads imparted by the shifting cargo into the vehicle body. However, this excursion must be managed so as not to encroach unacceptably towards the cabin 12.

The limit of forward excursion of the deforming wall 20 is increased by a second pair of substantially vertical lines Z2, Z3 arranged between the window 28 and the first pair of substantially vertical lines Z1, Z4.

A first or central region 60 is positioned between lines Z2 and Z3, and is approximately the same width as the window swage 42. Second and third side regions 61 and 62 are located outboard of the central region 60, flanked by fourth and fifth outer regions 63 and 64. The height of the central region 60 is substantially the same as the height of the cargo area 16, substantially from the vehicle floor to its roof. The height of the side regions 61, 62 and outer regions 63, 64 is substantially the same as the height of the first region 60, although there is some clearance in the top corners to allow for the curved profile at the edges of the roof. (This curved profile is often referred to as "tumble home".) The first pair of lines of locally reduced stiffness Z1, Z4 are arranged to define axes for relative movement between the side regions 61, 62, and the outer regions 63, 64. The second pair of lines of locally reduced stiffness Z2, Z3 are arranged to define axes for relative movement between the central region 60 incorporating the window 28, and the side regions 61, 62.

Controlling the relative movement of the wall 20 about the vertical lines of locally reduced stiffness Z1, Z2, Z3 and Z4 and the relative movement between the upper portion 22 and the lower portion 24 are the swage squares 48 and the swages 44, 46, 50 that define the swage squares 48, shown in detail in Fig. 4. Swage squares 48 are positioned adjacent to and substantially level with window 28, and are arranged to resist bending about the line Y-Y as shown in Fig. 5, minimizing stresses in the window area.

The swage squares 48 represent a region of relatively increased wall stiffness compared with the wall above, below and outboard of the window swage 42. This region of increased wall stiffness in the vicinity of the swage squares 48 is arranged to initiate deformation, and in particular bending, in the substantially vertical lines of locally reduced stiffness Z2, Z3 and in the substantially horizontal lines Y2, Y3 in the event of loading from a shifting cargo. The wall effectively stretches under loading, partly through flattening of the swages, with the window frame supported in the laterally central region of the wall. The area of the wall immediately surrounding the window is designed to not stretch, so that neither the window nor its frame is put into tension. The swage squares 48 are arranged to work in conjunction with the window swage 42 to initiate the bending of the upper portion 22 about line Y3 without imparting undesirable bending forces into the window 28. It will be appreciated that the initiation loads of the lines of locally reduced stiffness may be adjusted to suit a given vehicle application by adjusting the stiffness of the swage squares 48 relative to the stiffness of the area of wall that surrounds them.

The partition wall 20 of the present invention is provided with intermediate swages 50 and inner swages 52 arranged to primarily manage the resonant frequency of the wall 20 in use. The upper swages 54 are arranged to maintain the rigidity of the wall and to create a region of locally increased stiffness above the window 28 to initiate bending of the wall 20 about the line Y3 of locally reduced stiffness, in conjunction with the line Y4 of reduced stiffness adjacent to the vehicle roof. In this way, the wall 20 is permitted to deform in a controlled manner during loading; without undue deformation in the region of the window 28, which would otherwise result in potential breakage of the window glass.

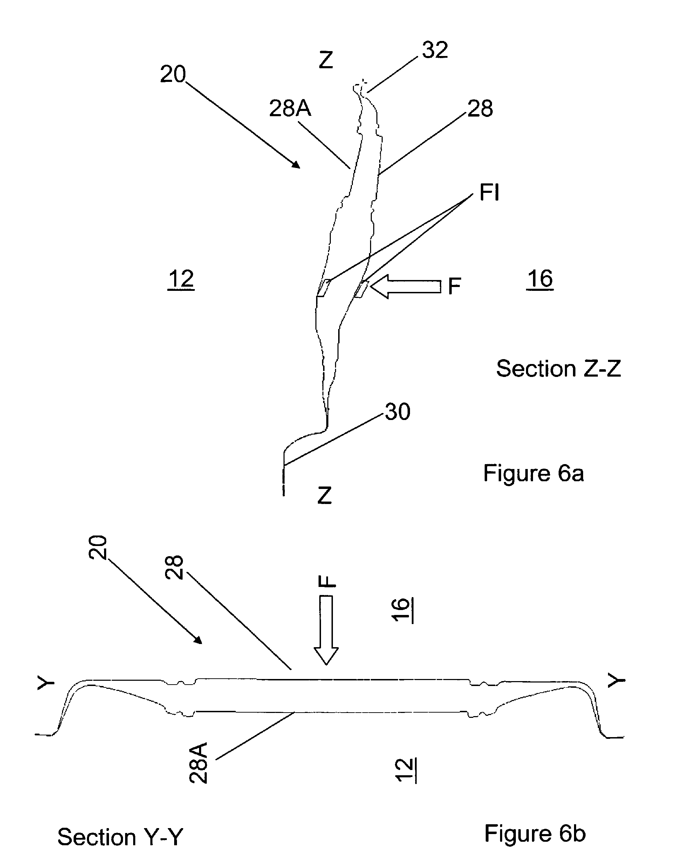

The advantages of the partition wall 20 of the present invention are demonstrated in Figures 6a and 6b, which respectively show examples of vertical and horizontal sections cut through the wall 20. Figures 6a and 6b show the sections before and after being subjected to loading by a force impactor FI in a test intended to simulate a cargo shifting forwards in the vehicle 10 and contacting the wall 20. Figure 6a shows a vertical section Z-Z cut through a central vertical axis of the wall, as shown by the dot-dashed line Z-Z in Figure 5. Figure 6b shows a horizontal section Y-Y cut through the wall at a height part way up the window 28, as shown by the dot-dashed line Y-Y in Figure 5. The orientation of the sections has been shown by the indication of the locations of the cabin 12 and cargo area 16 relative to the sections. The force impactor FI applies a substantially horizontal force F in the longitudinal direction from the cargo area towards the cabin at a point substantially at the mid-point of the wall 20. The location and orientation of the window is shown before the loading at 28; and after the loading, is represented by the post-test window position 28A.

It may be seen clearly from these sections that the displacement of window 28 is a combination of translation and rotation according to the deformation mechanism defined by the interaction of the window swage 42, the lines of locally reduced stiffness (Y1, Y2, Y3, Y4 and Z1, Z2, Z3, Z4) and the swage squares 48. During the displacement of the window 28, the deformation of wall 20 does not apply undue bending forces to window 28; thus ensuring that window 28 remains intact throughout the deformation event.

Maintaining the integrity of the window 28 keeps running and repair costs to a minimum, and improves overall vehicle safety for the user.

Other advantages will be apparent to one skilled in the art. The present examples and embodiments are to be considered illustrative and not restrictive. The invention is not to be limited to the details given herein, but may be modified within the scope and equivalence of the appended claims.

## Claims

1. A partition wall (20) for a vehicle (10), the partition wall (20) comprising a sheet metal pressing further comprising an integrally formed rigid window frame (27) adapted to support a discrete window (28); wherein:
said sheet metal pressing comprises a first set of substantially vertical swages (46), running from an upper portion (22) to a lower portion (24) of said pressing in use;
and said sheet metal pressing further comprises a second set of substantially horizontal swages (44), running from an left side to a right side of said pressing in use;
**characterized in that**:
said first set of swages (46) and said second set of swages (44) intersect with each other.

2. A partition wall (20) according to claim 1, wherein the swages (44, 46) surround at least three edges of the window frame (27).

3. A partition wall (20) according to claim 1 or claim 2, wherein at least two of the first set of swages (46) are arranged to the left of the window frame in use, and at least two of the first set of swages (46) are arranged to the right of the window frame in use.

4. A partition wall (20) according to any preceding claim, wherein two or more swage squares (48) are provided, said squares being positioned adjacent to, and substantially level with, the window frame (27).

5. A partition wall (20) according to any preceding claim, wherein areas of locally reduced stiffness (Y1, Y4, Z1, Z4) are located above, below, and to either side of the window frame (27).

6. A partition wall (20) according to claim 5, wherein a second area of locally reduced stiffness (Y2, Y3, Z2, Z3) is located on each of the four sides of the window frame (27).

7. A partition wall (20) according to any preceding claim, wherein said wall further comprises a base portion (26) comprising a recess (30).

8. A partition wall (20) according to any preceding claim, wherein a further arrangement of swages (50, 52) is provided in the lower portion (24) of said wall, said swages (50, 52) being substantially parallel to the first set of swages (46);
**characterized in that**:
the further arrangement of swages forms a pattern such that swages of a greater length (52) are located towards the centre line (Z-Z) of the partition wall (20), with the swages (50) being of decreasing length towards the sides (34) of the partition wall.

9. A partition wall (20) according to any preceding claim, wherein the partition wall has a load-bearing structure formed entirely from a single sheet of material.

10. A vehicle (10) comprising a partition wall (20) according to any of the preceding claims, where said wall (20) is arranged to separate a cargo area (16) at the rear of the vehicle (10) from a cabin area (12) of said vehicle.

11. A vehicle (10) according to claim 10, wherein said partition wall (20) is convex towards the cargo area (16).

12. A vehicle (10) according to claim 10 or claim 11, wherein said wall is affixed to a vehicle roof (17) at its upper portion (22), to the vehicle sides (19L, 19R) at its sides (34), and to the vehicle floor panel (13).

13. A vehicle (10) according to any one of claims 10 to 12, wherein in the event of an object applying a load (F) to the partition wall (20), the wall is arranged to deform so that the window frame (27) may be displaced, whilst remaining substantially undeformed.

14. A vehicle (10) according to any one of claims 10 to 13, wherein in the event of an object applying a load (F) to the partition wall (20), the wall is arranged to deform so that deflection of the window frame (27) is limited to rotation and/or translation without bending.

## Patentansprüche

1. Trennwand (20) für ein Fahrzeug (10), wobei die Trennwand (20) ein Metallblech-Pressteil umfasst, das weiter einen einstückig gebildeten starren Fensterrahmen (27) umfasst, der dazu angepasst ist, ein diskretes Fenster (28) zu halten; wobei:
das Metallblech-Pressteil einen ersten Satz von im Wesentlichen vertikalen Sicken (46) umfasst, die von einem oberen Abschnitt (22) zu einem unteren Abschnitt (24) des Pressteils im Einsatz verlaufen;
und wobei das Metallblech-Pressteil weiter einen zweiten Satz von im Wesentlichen horizontalen Sicken (44) umfasst, die von einer linken Seite zu einer rechten Seite des Pressteils im Einsatz verlaufen;
**dadurch gekennzeichnet, dass**:
der erste Satz von Sicken (46) und der zweite Satz von Sicken (44) einander kreuzen.

2. Trennwand (20) nach Anspruch 1, wobei die Sicken (44, 46) mindestens drei Ränder des Fensterrahmens (27) umgeben.

3. Trennwand (20) nach Anspruch 1 oder Anspruch 2, wobei mindestens zwei des ersten Satzes von Sicken (46) links von dem Fensterrahmen im Einsatz angeordnet sind und mindestens zwei von dem ersten Satz von Sicken (46) rechts von dem Fensterrahmen im Einsatz angeordnet sind.

4. Trennwand (20) nach einem der vorangehenden Ansprüche, wobei zwei oder mehr Sickenquadrate (48) vorgesehen sind, wobei die Quadrate dem Fensterrahmen (27) benachbart und im Wesentlichen auf einer Höhe damit positioniert sind.

5. Trennwand (20) nach einem der vorangehenden Ansprüche, wobei sich über, unter und auf beiden Seiten von dem Fensterrahmen (27) Bereiche örtlich reduzierter Steifigkeit (Y1, Y4, Z1, Z4) befinden.

6. Trennwand (20) nach Anspruch 5, wobei sich auf jeder der vier Seiten des Fensterrahmens (27) ein zweiter Bereich örtlich reduzierter Steifigkeit (Y2, Y3, Z2, Z3) befindet.

7. Trennwand (20) nach einem der vorangehenden Ansprüche, wobei die Wand weiter einen Basisabschnitt (26) umfasst, der eine Aussparung (30) umfasst.

8. Trennwand (20) nach einem der vorangehenden Ansprüche, wobei in dem unteren Abschnitt (24) der Wand eine weitere Anordnung von Sicken (50, 52) vorgesehen ist, wobei die Sicken (50, 52) im Wesentlichen parallel zum ersten Satz von Sicken (46) sind;
**dadurch gekennzeichnet, dass**:
die weitere Anordnung von Sicken ein Muster bildet, so dass die Sicken größerer Länge (52) zur Mittellinie (Z-Z) der Trennwand (20) hin liegen, wobei die Sicken (50) zu den Seiten (34) der Trennwand hin eine abnehmende Länge aufweisen.

9. Trennwand (20) nach einem der vorangehenden Ansprüche, wobei die Trennwand eine tragende Struktur aufweist, die vollkommen aus einer einzigen Platte von Material gebildet ist.

10. Fahrzeug (10), umfassend eine Trennwand (20) nach einem der vorangehenden Ansprüche, wobei die Wand (20) dazu angeordnet ist, einen Ladungsbereich (16) am Heck des Fahrzeugs (10) von einem Kabinenbereich (12) des Fahrzeugs zu trennen.

11. Fahrzeug (10) nach Anspruch 10, wobei die Trennwand (20) zum Ladungsbereich (16) hin konvex ist.

12. Fahrzeug (10) nach Anspruch 10 oder Anspruch 11, wobei die Wand an ihrem oberen Abschnitt (22) an einem Fahrzeugdach (17), an ihren Seiten (34) an den Fahrzeugseiten (19L, 19R) und an der Fahrzeugbodenplatte (13) befestigt ist.

13. Fahrzeug (10) nach einem der Ansprüche 10 bis 12, wobei, falls ein Gegenstand eine Last (F) auf die Trennwand (20) ausübt, die Wand dazu angeordnet ist, sich zu verformen, so dass der Fensterrahmen (27) verschoben werden kann und dabei im Wesentlichen unverformt bleibt.

14. Fahrzeug (10) nach einem der Ansprüche 10 bis 13, wobei, falls ein Gegenstand eine Last (F) auf die Trennwand (20) ausübt, die Wand dazu angeordnet ist, sich zu verformen, so dass die Auslenkung des Fensterrahmens (27) auf Drehung und/oder Translation ohne Biegen begrenzt ist.

## Revendications

1. Paroi de cloisonnement (20) pour un véhicule (10), la paroi de cloisonnement (20) comprenant une tôle métallique pressée comprenant en outre un cadre de fenêtre rigide solidaire (27) adapté pour supporter une fenêtre discrète (28) ; dans laquelle :
ladite tôle métallique pressée comprend un premier ensemble d'étampes sensiblement verticales (46), s'étendant depuis une partie supérieure (22) jusqu'à une partie inférieure (24) de ladite tôle pressée en service ;
et ladite tôle métallique pressée comprend en outre un second ensemble d'étampes sensiblement horizontales (44), s'étendant depuis un côté gauche jusqu'à un côté droit de ladite tôle pressée en service ;
**caractérisée en ce que** :
ledit premier ensemble d'étampes (46) et ledit second ensemble d'étampes (44) s'intersectent mutuellement.

2. Paroi de cloisonnement (20) selon la revendication 1, dans laquelle les étampes (44, 46) entourent au moins trois bords du cadre de fenêtre (27).

3. Paroi de cloisonnement (20) selon la revendication 1 ou la revendication 2, dans laquelle au moins deux du premier ensemble d'étampes (46) sont agencées sur la gauche du cadre de fenêtre en service, et au moins deux du premier ensemble d'étampes (46) sont agencées sur la droite du cadre de fenêtre en service.

4. Paroi de cloisonnement (20) selon l'une quelconque des revendications précédentes, dans laquelle deux ou plusieurs carrés d'étampe (48) sont fournis, lesdits carrés étant positionnés adjacents au cadre de fenêtre (27), et sensiblement à niveau avec celui-ci.

5. Paroi de cloisonnement (20) selon l'une quelconque des revendications précédentes, dans laquelle des zones de rigidité localement réduite (Y1, Y4, Z1, Z4) sont situées au-dessus, en dessous, et de chaque côté du cadre de fenêtre (27).

6. Paroi de cloisonnement (20) selon la revendication 5, dans laquelle une seconde zone de rigidité localement réduite (Y2, Y3, Z2, Z3) est située sur chacun des quatre côtés du cadre de fenêtre (27).

7. Paroi de cloisonnement (20) selon l'une quelconque des revendications précédentes, dans laquelle ladite paroi comprend en outre une partie de base (26) comprenant un évidement (30).

8. Paroi de cloisonnement (20) selon l'une quelconque des revendications précédentes, dans laquelle un autre agencement d'étampes (50, 52) est fourni dans la partie inférieure (24) de ladite paroi, lesdites étampes (50, 52) étant sensiblement parallèles au premier ensemble d'étampes (46) ;
**caractérisée en ce que** :
l'autre agencement d'étampes forme un motif selon lequel les étampes plus longues (52) sont situées vers l'axe central (Z-Z) de la paroi de cloisonnement (20), les étampes (50) allant en longueur décroissante vers les côtés (34) de la paroi de cloisonnement.

9. Paroi de cloisonnement (20) selon l'une quelconque des revendications précédentes, la paroi de cloisonnement ayant une structure porteuse formée entièrement à partir d'une seule tôle de matériau.

10. Véhicule (10) comprenant une paroi de cloisonnement (20) selon l'une quelconque des revendications précédentes, ladite paroi (20) étant agencée pour séparer une zone de chargement (16) à l'arrière du véhicule (10) d'une zone d'habitacle (12) dudit véhicule.

11. Véhicule (10) selon la revendication 10, dans lequel ladite paroi de cloisonnement (20) est convexe vers la zone de chargement (16).

12. Véhicule (10) selon la revendication 10 ou la revendication 11, dans lequel ladite paroi est fixée à un toit (17) du véhicule au niveau de sa partie supérieure (22), aux côtés (19L, 19R) du véhicule au niveau de ses côtés (34), et au panneau de plancher (13) du véhicule.

13. Véhicule (10) selon l'une quelconque des revendications 10 à 12, dans lequel, dans le cas de l'application par un objet d'une charge (F) sur la paroi de cloisonnement (20), la paroi est agencée pour se déformer de telle sorte que le cadre de fenêtre (27) puisse être déplacé, tout en restant sensiblement non déformé.

14. Véhicule (10) selon l'une quelconque des revendications 10 à 13, dans lequel, dans le cas de l'application par un objet d'une charge (F) sur la paroi de cloisonnement (20), la paroi est agencée pour se déformer de telle sorte que la flèche du cadre de fenêtre (27) soit limitée à une rotation et/ou une translation sans cintrage.
